# EUROPEAN PATENT APPLICATION

(11) **EP 4 351 254 A1**
(43) Date of publication of application: **10.04.2024**
(21) Application number: 23201871.3
(22) Date of filing: 05.10.2023
(51) Int. Cl.: H04W 72/044, H04B 7/0408

(54) **INTERFERENCE MITIGATION IN MULTI-USER MULTI-BEAM WIRELESS COMMUNICATION**

(30) Priority: 07.10.2022 GB 202214780
(71) Applicant: Airspan IP Holdco LLC, Boca Raton, FL 33431 (US)
(72) Inventor: LOGOTHETIS, Andrew, High Wycombe, HP10 8DN (GB); PERSAUD, Marlon Peter, Beaconsfield, HP9 1JJ (GB); SARAO, Honey Kanwar Singh, Slough, SL1 6AU (GB)
(74) Representative: D Young & Co LLP

(57) **Abstract**

Wireless base stations and operating methods therefor are disclosed, where the wireless base station is configured for wireless communication with a plurality of terminals and comprises an antenna array to generate a plural beams. A scheduler allocates wireless resources comprising the plural beams and plural resource block groups. The wireless resource allocation for a given timeslot comprises an initial and an iterative stage, the initial stage comprising: selecting a first beam for allocation to a first terminal and determining a first selected subset of RBGs that satisfy a channel quality threshold. The iterative stage comprises selecting a further beam for allocation to a further terminal and determining a candidate subset of RBGs that each do not have expected interference above an interference tolerance threshold for any already-allocated resource. From this subset an allocation is made to satisfy a channel quality threshold. The iterative stage is repeated as required.

## Description

The present techniques relate to interference mitigation in wireless communication systems.

A wireless communications system can be provided comprising a base station and multiple user terminals served by that base station. When the base station comprises an antenna array, this can be arranged to generate a plurality of distinct beams which are used to transmit and receive signals from the plurality of user terminals, under the control of wireless communication circuitry in the base station. The wireless communication may employ a standard such as 5G NR, LTE, or any other wireless communication standard. In a particular example of a wireless communications network, the terminals could be installed in moving vehicles such as aircraft. A single base station may communicate with a plurality of terminals at any given time (e.g. a one-to-many arrangement), by adopting a suitable technology such as multiple-input-multiple-output (MIMO) technology where multiple antennas are used to support the transmitting and receiving of multiple data signals simultaneously over the same wireless communication resources. In addition, it is often the case that multiple base stations may be deployed in order to provide coverage for a larger area. Beamforming techniques can allow multiple beams from the antenna array to point in different directions at the same time, offering a high antenna gain in the desired direction, while limiting the radiated power in other directions. Hence the base station can employ multiple beams simultaneously to offer concurrent connectivity to multiple users and thus enhance the system capacity. However, a significant drawback of this kind of multi-beam technology is the inherent degree of interference injected to adj acent beams. One way of limiting this effect is to use beam nulling, but this require a high degree of antenna array calibration, which is generally unavailable to wireless communication systems operating at very high frequencies. In addition, an unavoidable feature of beam nulling is the introduction of noise enhancement in the receiver.

At least some examples herein provide a wireless base station configured for wireless communication with a plurality of terminals and comprising an antenna array configured to generate a plurality of beams, wherein the base station comprises:
a scheduler configured to allocate wireless resources to support the wireless communication, wherein the wireless resources comprise the plurality of beams and a plurality of resource block groups (RBGs), wherein each resource block group is a portion of a frequency range available for the wireless communication in a timeslot, wherein the scheduler is configured to perform wireless resource allocation for the timeslot comprising an initial stage and an iterative stage, wherein the initial stage comprises:
selecting a first selected beam of the plurality of beams for allocation to a first terminal;
determining, for the first selected beam, a first selected subset of RBGs that satisfy a channel quality threshold; and
allocating to the first terminal a first resource allocation comprising the first selected beam and the first selected subset of RBGs,
and wherein the iterative stage comprises:
selecting a further selected beam of the plurality of beams for allocation to a further terminal;
determining, for the further selected beam, a further candidate subset of RBGs that each do not have expected interference above an interference tolerance threshold for any already-allocated resource allocation;
determining, from the further candidate subset of RBGs, a further selected subset of RBGs that each satisfy a channel quality threshold; and
allocating to the further terminal a further resource allocation comprising the further selected beam and the further selected subset of RBGs;
and wherein the wireless resource allocation further comprises iteratively repeating the iterative stage to allocate wireless resource for the plurality of terminals.

At least some examples herein provide a method of operating a wireless base station configured for wireless communication with a plurality of terminals and comprising an antenna array configured to generate a plurality of beams, wherein the method comprises:
allocating wireless resources to support the wireless communication, wherein the wireless resources comprise the plurality of beams and a plurality of resource block groups (RBGs), wherein each resource block group is a portion of a frequency range available for the wireless communication in a timeslot, wherein the allocating for the timeslot is performed in an initial stage and an iterative stage, wherein the initial stage comprises:
selecting a first selected beam of the plurality of beams for allocation to a first terminal;
determining, for the first selected beam, a first selected subset of RBGs that satisfy a channel quality threshold; and
allocating to the first terminal a first resource allocation comprising the first selected beam and the first selected subset of RBGs,
and wherein the iterative stage comprises:
selecting a further selected beam of the plurality of beams for allocation to a further terminal;
determining, for the further selected beam, a further candidate subset of RBGs that each do not have expected interference above an interference tolerance threshold for any already-allocated resource allocation;
determining, from the further candidate subset of RBGs, a further selected subset of RBGs that each satisfy a channel quality threshold; and
allocating to the further terminal a further resource allocation comprising the further selected beam and the further selected subset of RBGs;
and wherein the wireless resource allocation further comprises iteratively repeating the iterative stage to allocate wireless resource for the plurality of terminals.

The present techniques will be described further, by way of example only, with reference to embodiments thereof as illustrated in the accompanying drawings, to be read in conjunction with the following description, in which:
Figure 1 schematically illustrates a wireless base station configured for wireless communication with a plurality of terminals and comprising an antenna array configured to generate a plurality of beams in accordance with some examples;
Figure 2 illustrates a range of narrow beams which could be generated by a base station antenna array, each highly directional with respect to a selected azimuthal direction with respect to the antenna array, in accordance with some examples;
Figure 3 schematically illustrates the Time Division Duplex (TDD) structure of a given time period, in which the time period is subdivided into ten slots, in accordance with some examples;
Figure 4 illustrates example antenna array gain for a selected beam, which has been chosen to serve wireless communication users located in a narrow range of azimuth, in accordance with some examples;
Figure 5 illustrates the level of interference injected by the selected beam in the example of Figure 4 in the direction of other beams, in accordance with some examples;
Figure 6 shows the allocation of beams to users for use in a selected timeslot, in accordance with some examples;
Figure 7 shows a sequence of steps which are taken when carrying out a method of wireless resource allocation in accordance with some examples;
Figure 8 shows a sequence of steps which are taken when carrying out a method of wireless resource allocation in accordance with some examples;
Figures 9a-d illustrate the interference impact of the allocation of wireless resource comprising a first group of RBGs using a first beam to a first user terminal in accordance with an example configuration;
Figures 10a-d illustrate the interference impact of the further allocation of wireless resource comprising a second group of RBGs using a second beam to a second user terminal in accordance with an example configuration;
Figures 11a-d illustrate the interference impact of the further allocation of wireless resource comprising a third group of RBGs using a third beam to a third user terminal in accordance with an example configuration;
Figures 12a-d illustrate the interference impact of the further allocation of wireless resource comprising a fourth group of RBGs using a fourth beam to a fourth user terminal in accordance with an example configuration;
Figures 13a-d illustrate the interference impact of the further allocation of wireless resource comprising a fifth group of RBGs using a fifth beam to a fifth user terminal in accordance with an example configuration;
Figures 14a-d illustrate the interference impact of the further allocation of wireless resource comprising a sixth group of RBGs using a sixth beam to a sixth user terminal in accordance with an example configuration;
Figures 15a-d illustrate the final wireless resource allocations after the iterative process illustrated by Figures 9 to 14, in terms of a) the space and frequency allocations, b) the allocated beam indices per user terminal, c) the allocated RBGs per user terminal, and d) the allocate beam indices per RBG, when the inter-beam interference does not exceed 10 dB;
Figures 16a-d illustrate the final wireless resource allocations after the iterative process illustrated by Figures 9 to 14, in terms of a) the space and frequency allocations, b) the allocated beam indices per user terminal, c) the allocated RBGs per user terminal, and d) the allocate beam indices per RBG, when the inter-beam interference does not exceed 6 dB; and
Figures 17a-d illustrate the final wireless resource allocations after the iterative process illustrated by Figures 9 to 14, when adjacent beams are also tested as candidates, in terms of a) the space and frequency allocations, b) the allocated beam indices per user terminal, c) the allocated RBGs per user terminal, and d) the allocate beam indices per RBG, when the inter-beam interference does not exceed 10 dB.

In at least one example herein there is a wireless base station configured for wireless communication with a plurality of terminals and comprising an antenna array configured to generate a plurality of beams, wherein the base station comprises:
a scheduler configured to allocate wireless resources to support the wireless communication, wherein the wireless resources comprise the plurality of beams and a plurality of resource block groups (RBGs), wherein each resource block group is a portion of a frequency range available for the wireless communication in a timeslot, wherein the scheduler is configured to perform wireless resource allocation for the timeslot comprising an initial stage and an iterative stage, wherein the initial stage comprises:
selecting a first selected beam of the plurality of beams for allocation to a first terminal;
determining, for the first selected beam, a first selected subset of RBGs that satisfy a channel quality threshold; and
allocating to the first terminal a first resource allocation comprising the first selected beam and the first selected subset of RBGs,
and wherein the iterative stage comprises:
selecting a further selected beam of the plurality of beams for allocation to a further terminal;
determining, for the further selected beam, a further candidate subset of RBGs that each do not have expected interference above an interference tolerance threshold for any already-allocated resource allocation;
determining, from the further candidate subset of RBGs, a further selected subset of RBGs that each satisfy a channel quality threshold; and
allocating to the further terminal a further resource allocation comprising the further selected beam and the further selected subset of RBGs;
and wherein the wireless resource allocation further comprises iteratively repeating the iterative stage to allocate wireless resource for the plurality of terminals.

The wireless base station is thus provided with the ability to generate plural beams (for example by applying beamforming techniques to its antenna array) and a selection from amongst the multiple beams represents one aspect of the allocation of wireless resources to support wireless communication between the wireless base station and the user terminals. Moreover, within any selected beam, the wireless base station can transmit or receive data to or from the user terminals using selected resource block groups (RBGs). Accordingly, in order to establish wireless communication with any given user terminal, the scheduler of the wireless base station firstly selects a given beam (which is typically a narrow shaped beam pointing substantially directly at the physical location of the user terminal, though dense physical environments (e.g. urban areas) can create more complex radiation transmission, absorption, and reflection conditions which can mean that other, e.g. adjacent, beam patterns can in practice provide better channel quality). Further, the scheduler then allocated a certain selection of resource block groups to be used in combination with that selected beam for the selected user terminal. However, the present techniques recognise that each allocation of a selected beam and selected set of resource block groups will, to a greater or less extent, have an impact (in terms of interference) on any other resource allocation which has already been made (e.g. using a different beam and different set of resource block groups) for the same timeslot. As such, an iterative approach is disclosed here, according to which (following an initial allocation of a selected beam / set of RBGs to a first user terminal) further beam and RBG selections are assessed according to their expected interference effect on any already-allocated resource allocations and which in themselves satisfy a given channel quality threshold. Thus, from amongst the full set of available beams and RBGs the scheduler is able to build up the wireless resource allocation for a set of user terminals which both provides each user terminal with the resource allocation it requires in order to fulfil its communication needs whilst ensuring that in doing so the inter-beam interference amongst all allocated beams does not exceed a predefined level. It should be noted that whilst the wireless resource comprises the above-discussed plural (spatial) beams and resource block groups allocated in timeslots, the scheduler may also determine other aspects of each wireless communication channel, such as the transmission power and the modulation and coding scheme (MCS), in particular to the extent that adjustment of such factors presents a further way of tuning the quality of the wireless communication channel.

Whilst in some examples the wireless base station might only allocate one beam to each user terminal (with a suitably selected set of RBGs for each), in some examples iteratively repeating the iterative stage to allocate wireless resource for the plurality of terminals comprises at least one repetition of the iterative stage for at least one further terminal to allocate more than one beam to the at least one further terminal. Thus in such examples at least one user terminal may be served by more than one beam generated by the wireless base station's antenna array within a given timeslot.

In principle the iterations of beam allocation to a given user terminal may simply continue until a predefined channel quality is established for that user terminal, but in some examples iteratively repeating the iterative stage to allocate wireless resource for the plurality of terminals comprises a predetermined maximum number of repetitions of the iterative stage for the at least one further terminal to allocate at most the predetermined maximum number of beams to the at least one further terminal. This predetermined maximum number of beams be imposed for a number of reasons, for example, regulatory constraints may be imposed on systems that limit the number of beams and/or the width of beams that can be used during downlink communication from the base station, and in some instances there may additionally be some hardware constraints that also limit the beams used for downlink communication. With regard to uplink communication, it is often the case that regulatory authorities do not place any limitations on the uplink beams used, but there could still be hardware limitations that constrain the number of beams and/or the width of the beams used for uplink communication.

In some examples, the selection of beams for allocation to terminals is performed in dependence on a set of beam rankings. Such beam rankings may derive from a variety of sources.

In some examples, the set of beam rankings is dependent on channel quality reports received by the wireless base station from the plurality of terminals.

In some examples, the set of beam rankings is dependent on channel quality reports determined by the wireless base station.

The selection of the further selected beam of the plurality of beams in the iterative stage(s) of the wireless resource allocation may be based on various criteria. For example, when selecting a further beam for a further user terminal (i.e. in addition to those for which allocation has already occurred), it may be desirable to select a beam which is a spatially separated as possible from any already-allocated beams, on the assumption that such a beam is generally less likely to cause interference in, or suffer interference from, those already-allocated beams. Equally, when selecting a further beam to use for a user terminal which has already been allocated at least one beam, the proximity of the further beam to an already allocated beam may be considered advantageous. For example, at least in deployments where the wireless base station has line-of-sight view of a given user terminal, adjacent beams may offer similar channel quality for that terminal. Hence in some examples, at least one iteration of the iterative stage comprises selecting the further selected beam of the plurality of beams for allocation to the further terminal on a basis that the further selected beam is adjacent to an already-allocated beam for the further terminal.

Accordingly, in some such examples, the wireless base station is configured to respond to a channel quality report from the further terminal indicating a preferred beam to select an adjacent beam to the preferred beam in a subsequent iteration stage. Thus when a terminal indicates a preferred beam to the wireless base station, the scheduler may test whether adjacent beams to that preferred beam can improve the channel quality for the terminal.

In some examples, the scheduler is configured to perform the wireless resource allocation for the timeslot following a ranked order of terminals. This ranked order may derive from a number of sources, such as a first-come-first-served policy operated by the wireless base stations for subscriber terminals, or the terminals themselves may be known to the wireless base station to have an inherent priority ranking with respect to one another.

As mentioned above, the wireless base station may also make use of an ability to vary transmission power in order to improve channel quality and/or to reduce interference, and accordingly in some examples at least one of:
determining the first selected subset of RBGs;
determining the further candidate subset of RBGs; and
determining the further selected subset of RBGs,
is performed as a nested iterative process, in which a power distribution across the relevant RBGs is varied at each iteration of the nested iterative process in order to determine at least one of the first selected subset of RBGs, the further candidate subset of RBGs, and the further selected subset of RBGs in a manner which improves channel quality and/or to reduce interference.

In some examples, the wireless resource allocation for the timeslot is for downlink communication from the wireless base station to the plurality of terminals.

In some examples, the wireless resource allocation for the timeslot is for uplink communication to the wireless base station from the plurality of terminals.

The allocation of wireless resource to the user terminal selects a combination of a selected beam and a selected set of RBGs at each iteration. Where the wireless base station may have the ability to generate a large number of distinct beams from its antenna array, this selection may thus often comprise the selection of a beam which has not yet been used within the wireless resource allocation for the current timeslot. However, this need not always be the case and indeed the present techniques provide great flexibility in the allocation of wireless resource by the systematic assessment at each step of the iterative process of the interference effect of each allocation, to the extent that separate subsets of RBGs for each beam can be allocated independently of one another. Accordingly, in some examples amongst the first selected beam of the initial stage and all further selected beams of the iterative stage, at least one beam is re-used.

The interference tolerance threshold may be universal or may be defined individually for the context and in some examples the interference tolerance threshold is dependent on the further selected beam.

As mentioned above, the wireless base station may also make use of an ability to set the modulation and coding scheme in order to improve channel quality and/or to reduce interference, and accordingly in some examples the wireless resource allocation for the timeslot further comprises a modulation and coding scheme selection for the first resource allocation and for the further resource allocation.

In at least one example herein there is a method of operating a wireless base station configured for wireless communication with a plurality of terminals and comprising an antenna array configured to generate a plurality of beams, wherein the method comprises:
allocating wireless resources to support the wireless communication, wherein the wireless resources comprise the plurality of beams and a plurality of resource block groups (RBGs), wherein each resource block group is a portion of a frequency range available for the wireless communication in a timeslot, wherein the allocating for the timeslot is performed in an initial stage and an iterative stage, wherein the initial stage comprises:
selecting a first selected beam of the plurality of beams for allocation to a first terminal;
determining, for the first selected beam, a first selected subset of RBGs that satisfy a channel quality threshold; and
allocating to the first terminal a first resource allocation comprising the first selected beam and the first selected subset of RBGs,
and wherein the iterative stage comprises:
selecting a further selected beam of the plurality of beams for allocation to a further terminal;
determining, for the further selected beam, a further candidate subset of RBGs that each do not have expected interference above an interference tolerance threshold for any already-allocated resource allocation;
determining, from the further candidate subset of RBGs, a further selected subset of RBGs that each satisfy a channel quality threshold; and
allocating to the further terminal a further resource allocation comprising the further selected beam and the further selected subset of RBGs;
and wherein the wireless resource allocation further comprises iteratively repeating the iterative stage to allocate wireless resource for the plurality of terminals.

Some particular embodiments are now described with reference to the figures.

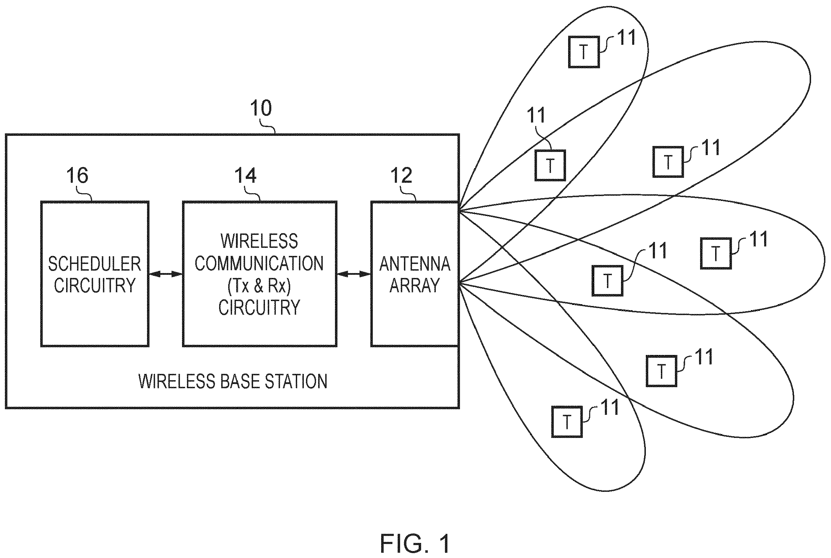

Figure 1 schematically illustrates schematically illustrates a wireless base station 10 configured for wireless communication with a plurality of terminals ("T") 11. The base station 10 includes an antenna array 12, which is arranged to generate a plurality of beams to transmit and receive signals from the plurality of terminals, under the control of wireless communication circuitry 14. In particular, the wireless communication circuitry 14 controls the antenna array 12 to transmit information (referred to as downlink information) to the plurality of terminals on one or more transmission beams, and to receive information (referred to as uplink information) transmitted by the plurality of terminals on one or more reception beams.

The transmission beams and reception beams are directional, so that they are only visible to terminals in a given direction (e.g. within a given angular range, the width of the range being dependent on how broad the beam is) - e.g. a transmission beam is considered to be "visible" to a given terminal if data transmitted using the transmission beam can be received by the terminal's antenna circuitry, and a reception beam is considered to be "visible" to the given terminal if the base station can receive data, transmitted by the terminal, on the reception beam. The number of beams which can be used at any given time by the antenna array may be limited based on hardware constraints associated with the specific circuitry of the base station 10, and/or due to certain regulatory constraints - for example, some jurisdictions may require that the number of transmission beams (downlink beams) in operation at any given time be limited to a certain number. In some cases, regulatory constraints may limit the number of beams further (e.g. to a lower number) than the hardware constraints.

The antenna array 12 is made up of a plurality of antenna elements, and the base station 10 may further comprise beamforming circuitry (not shown) to generate the one or more reception and transmission beams, and beam steering circuitry (not shown) to steer (e.g. rotate) the beams. As will be discussed in more detail below, the wireless communication circuitry 14 controls the antenna array 12 to communicate with the plurality of terminals in predetermined time slots. In particular, the antenna array transmits downlink data to the one or more terminals in transmission time slots (also referred to as downlink slots or transmission slots) and does not transmit data during reception time slots (also referred to as uplink slots or reception slots), which are instead reserved for reception of information transmitted by the one or more terminals.

Accordingly, since both the number of beams that can operate at a given time and the time slots during which the base station can transmit or receive information are limited, there is a need to determine a schedule for when each of the plurality of terminals will transmit and receive data, and to determine the wireless communication resources (e.g. including which beam) to be employed for communication with each terminal. This is particularly the case when there are a large number of terminals in communication with a single base station, especially if these terminals are spread out such that they cannot all be reached by a limited number of beams.

Hence, the base station 10 of Figure 1 also includes scheduler circuitry 16. The scheduler circuitry comprises downlink scheduling circuitry arranged to perform a downlink scheduling process to determine downlink data allocations indicating, for a given downlink slot, which terminals the base station will transmit downlink data to and which wireless resources will be used to transmit the downlink data. Similarly, the scheduler circuitry 16 comprises uplink scheduling circuitry configured to perform an uplink scheduling process to determine uplink data allocations indicating, for one or more uplink slots subsequent to (e.g. later than) the given downlink slot, which terminals the base station expects to receive uplink information from, and which wireless resources it expects to be used. It will be appreciated that in practice the downlink scheduling circuitry and the uplink scheduling circuitry may be provided by the same circuitry and only the usage of the determined schedule differs. The downlink data allocations and the uplink data allocations are communicated to the terminals in the form of control information - in particular, the control information includes downlink control information (DCI) indicating the downlink data allocations and uplink control information (UCI) indicating the uplink data allocations. The control information - including both the DCI and the UCI - is transmitted by the antenna array as part of the downlink data.

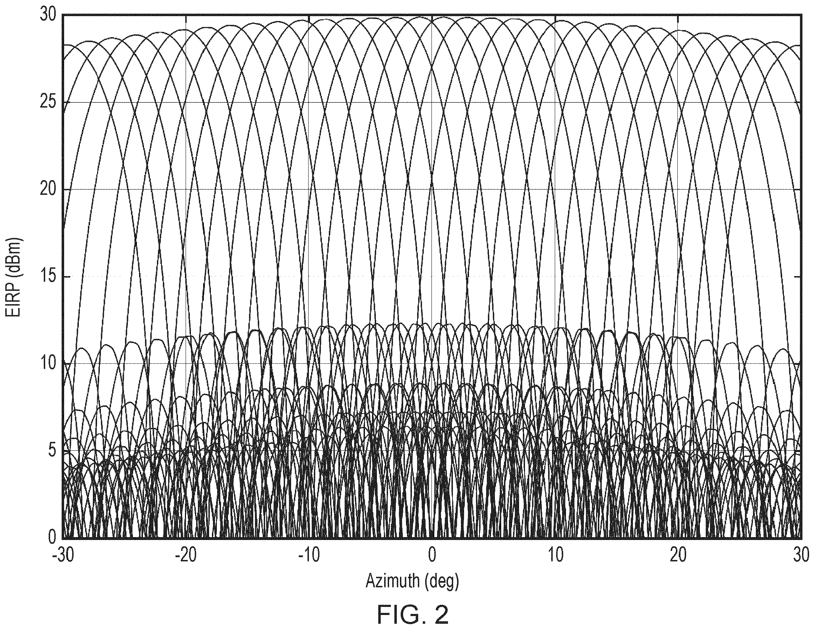

The beams generated by the antenna array may be highly directional in order to support a targeted communication channel established between the base station and a particular user terminal. Figure 2 illustrates a range of narrow beams which could be generated by a base station antenna array, each highly directional with respect to a selected azimuthal direction with respect to the antenna array, in terms of the Equivalent Isotropic Radiated Power (EIRP) of each beam. The example of Figure 2 shows narrow beams generated covering a cell from -30 to +30 degrees in azimuth with respect to the antenna array. Each beam points to a fixed azimuth direction, offering a high antenna gain in the desired direction, while limiting the radiated power in unintended directions. Note that multiple beams may exist simultaneously, offering concurrent connectivity to multiple user terminal and thus enhancing thus the system capacity.

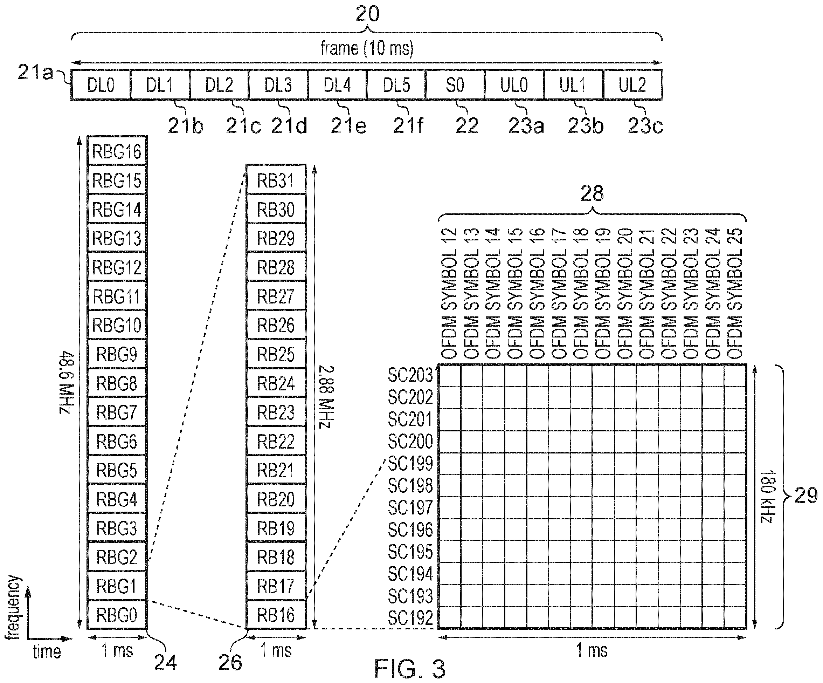

Figure 3 schematically illustrates the Time Division Duplex (TDD) structure of a given time period, in which the time period is subdivided into ten slots, in accordance with some examples. As noted above, the base station 10 is configured to communicate with the plurality of terminals in predetermined transmission time slots (downlink slots) and reception time slots (uplink slots). Figure 3 shows an example of how these time slots may be arranged within a time period referred to as a frame.

In the example of Figure 3, a frame 20 represents a 10ms time period and is divided into ten slots 21, 22, 23. In particular, the ten slots in this example comprise six downlink slots 21a-21f, three uplink slots 23a-23c and one special/reserved slot 22. The downlink slots represent periods of time during which downlink communication may be performed. In particular, the base station 10 is configured to transmit downlink data (also referred to as downlink information) to terminals during the downlink slots. On the other hand, the uplink slots represent periods of time during which uplink communication may be performed. In particular, the base station 10 is configured to receive uplink data (uplink information) from terminals during the uplink slots. The special/reserved slot S0 22 is used to provide some separation between downlink communication and uplink communication, and hence allow time for the wireless communication circuitry to reconfigure its operation between transmission and reception.

As shown in Figure 3, each slot - including both downlink slots 21 and uplink slots 23 - comprises seventeen resource block groups (RBGs) 24 in the frequency domain. Each RBG 24 represents a portion of the frequency range used by the base station to communicate with the plurality of terminals. In the example of Figure 3, the total frequency range is 48.6 MHz, and each RBG 24 covers a portion of that range - in this particular example, the first 16 RBGs (RBG0 to RBG 15) each cover 2.88 MHz, while the 17th RBG (RBG16) covers a range of 2.52 MHz. However, it will be appreciated that this is just one example of the frequency ranges that could be covered by each of the RBGs, and in other examples all RBGs may cover an equal portion of the frequency range. Each RBG 24 is, in turn, divided into resource blocks (RBs) 26 in the frequency domain, each covering a portion of the frequency range covered by the RBG 24 - in the example of Figure 3, each RBG 24 other than the last one comprises sixteen RBs 26 (the last one, RBG16, comprises 14 RBs), each of which covers a frequency range of 180 kHz. Finally, each RB 26 is further divided in both the time domain and the frequency domain. In particular, each RB 26 comprises fourteen OFDM (orthogonal frequency domain multiplexing) symbols 28 in the time domain and 12 subcarriers (SC) 29 in the frequency domain.

Different RBGs 24 within a single slot can be allocated for communication with different terminals if desired, and the wireless communication resources identified for each data allocation will indicate the RBGs allocated. It is also possible to allocate individual RBs 26 to different terminals - in which case the wireless communication resources identified for each data allocation will indicate the relevant RBs 26 allocated. Whilst each subcarrier/OFDM symbol unit (denoted by the individual squares in the right hand side of Figure 3) may carry separate items of information, an individual RB is the smallest addressable unit in time and frequency, and hence the smallest individually allocatable unit of the frequency spectrum is the resource block.

By using different beams, it is possible to allocate the same RBs or RBGs to multiple terminals within the same slot, with each of the terminals using a different beam. Indeed, in one example implementation, when making data allocations, all of the useable RBGs for a downlink data allocation or an uplink data allocation are allocated to the identified terminal for that data allocation, and the use of different beams allows more than one terminal to be communicated with in a particular slot.

As discussed above, the base station 10 may employ multiple beams, each of which is directional (e.g. covers a limited angular range) to communicate with terminals in different directions at the same time. Nevertheless, the present techniques recognise that concurrently employed beams (i.e. active during the same timeslot) will interfere with one another and the level of that interference must be carefully monitored in order to derive the required throughput between the base station and the terminals.

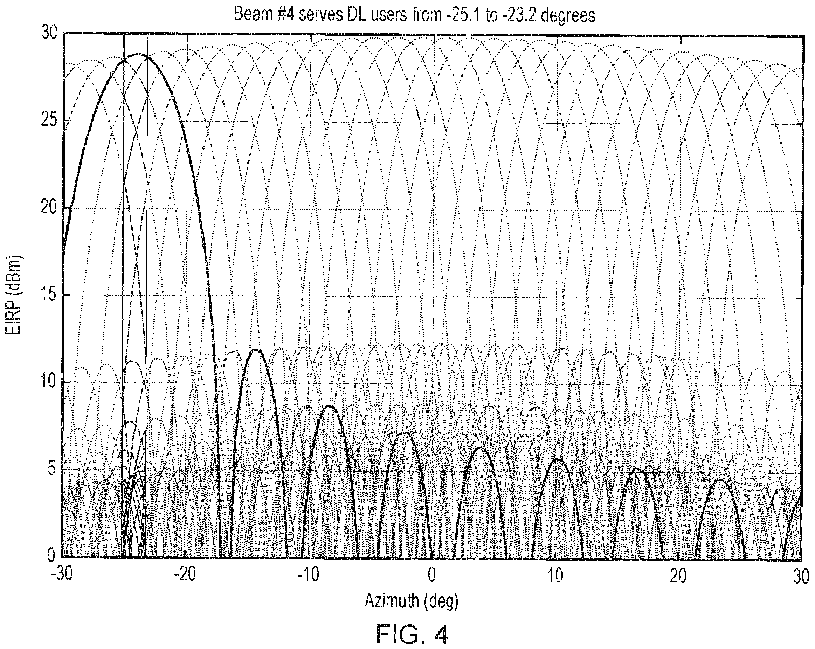

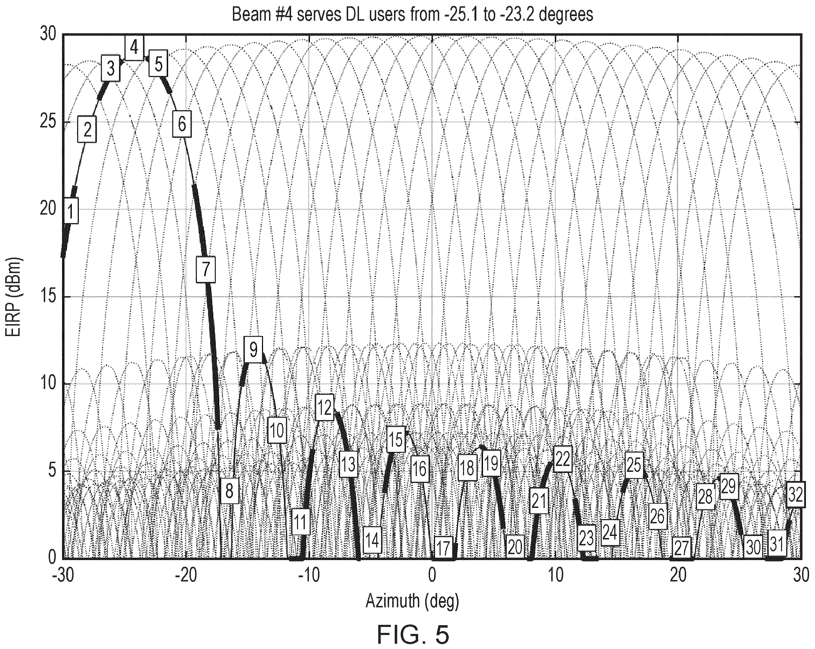

Figure 4 illustrates example antenna array gain for a selected beam, which has been chosen to serve wireless communication users located in a narrow range of azimuth, in accordance with some examples. In this particular example, beam #4 is selected to provide downlink wireless communication for users located between -25.1 to -23.2 degrees in azimuth. Also shown (dashed lines) are the level of interference of other beams in the main direction (central portion) of beam #4. It can therefore be seen that the three most adjacent beams either side of beam #4, if active, would inject a significant level of interference towards a user served by beam #4. Figure 5 illustrates the level of interference injected by the selected beam in the example of Figure 4 in the direction of other beams. As illustrated, the antenna array gain of beam #4 is segmented into regions by alternating a thick and a thin line. Midway along each line segment is a box with a number indicating the beam number being interfered by beam #4. Clearly the interference is greatest for those beams closest in azimuthal angle.

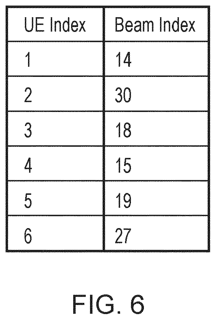

The wireless resource allocation procedure disclosed herein begins with the establishment of a set of users (user terminals) which are seeking to establish wireless communication with the base station. Each user is associated with a preferred beam, as indicated by the example table shown in Figure 6. The association of beam indices with user indices may be established according to two methods. Either each individual user (terminal) can report to the base station the beam which it has itself determined to be its own preferred beam or the base station can determine a preferred beam for each user (UE). In the former case, this determination is transmitted from the UE as part of the Uplink Channel Information which is transmitted by the LTE to the base station, typically using the Physical Uplink Control Channel (PUCCH). The Uplink Channel Information comprises one or more of the following:
- ACK/NACK, to acknowledge (or not) a correct decode of a downlink (DL) block of data;
- Scheduling Request (SR), when a LTE wishes to inform the base station that it has data available for transmission in the uplink (UL);
- Channel State Information (CSI) - an indication of the DL radio channel quality, which may contain one or more of the following
   ∘ Channel Quality Indicator (CQI)
   ∘ Rank Indicator (RI)
   ∘ Precoding Matrix Indicator (PMI)
   ∘ Layer Indicator (LI)
   ∘ SS/PBCH Block Resource Indicator (SSBRI)
   ∘ CSI-RS Resource Indicator (CRI)
   ∘ L1-RSRP

In particular, in a wireless communications systems employing a grid of narrow beams such as shown in Figure 2, a unique Channel State Information - Reference Signal (CSI-RS) is transmitted by the base station on each narrow beam. The UE measures the quality of the plurality of CSI-RS and reports the CRI to indicate the CSI-RS index that yield the highest DL RSRP or SINR. Thus a preferred beam is identified by each UE.

Alternatively, the preferred DL beam index may be determined by the base station by analysing the UL transmissions received from the UEs. For example, a UE may transmit a Sounding Reference Signal (SRS) that the base station uses to establish the quality of the signal in space and in frequency. This approach is valid if a) channel reciprocity holds (which is valid in TDD), and b) the antenna array system is calibrated in the UL and the DL. In FDD, the transmission (TX) beam weights are derived from the UL beam weights subject to frequency translation to account for the difference in frequencies used for the LTL and the DL (in a manner with which the skilled person is familiar).

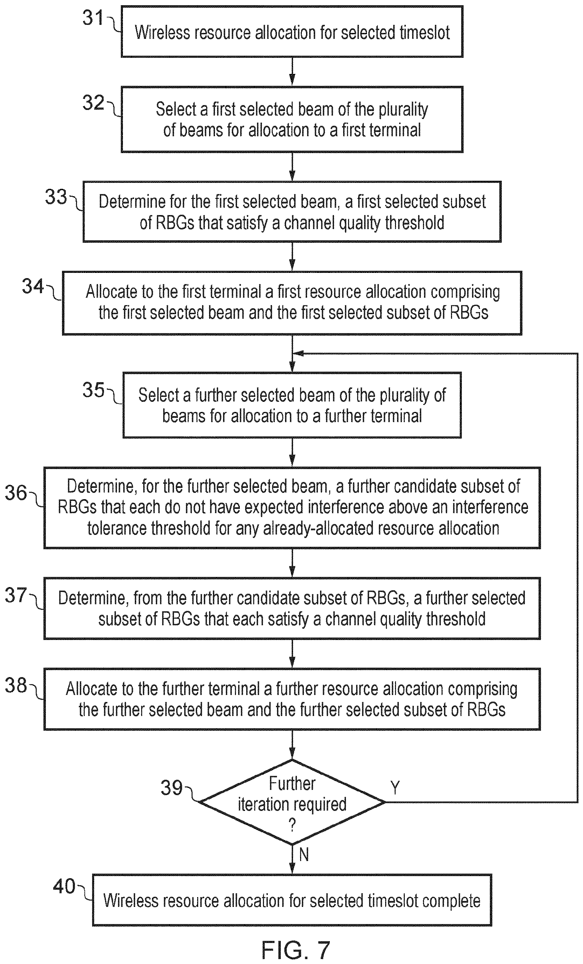

By whatever means a preferred beam is established for each user terminal the following describes how the present techniques are applied in order to allocate wireless resource to the list of user terminals. Figure 7 shows a sequence of steps which are taken when carrying out a method of wireless resource allocation in accordance with some examples. The sequence of steps begins at step 31, when wireless resource is to be allocated for a selected timeslot. Next at step 32, a first selected beam of the plurality of beams available for allocation is selected for allocation to a first terminal. This can for example be the preferred beam associated with the terminal as indicated by a table such as that show in Figure 6. Then, at step 33, a first selected subset of RBGs are determined for the first selected beam, where these RBGs satisfy a channel quality threshold. This combination of selected beam and selected subset of RBGs are then allocated to the first terminal at step 34. There then follows an iterative process, where each iteration comprises firstly, at step 35, selecting a further selected beam of the plurality of beams for allocation to a further terminal. Generally this will involve selecting a different beam, although the present techniques allow for the possibility of two user terminals being served in the same timeslot by separate subsets of RBGs provided by the same beam. Then, at step 36, a further candidate subset of RBGs is determined for the further selected beam, where this subset of RBGs each do not have expected interference above an interference tolerance threshold for any already-allocated resource allocation. At step 37, from this further candidate subset of RBGs, a further selected subset of RBGs is then determined that each satisfy a channel quality threshold. At step 38 a wireless resource allocation is made to the further terminal, comprising the further selected beam and the further selected subset of RBGs. Here an iteration is complete, and at step 39 it is determined if a further iteration is required, noting that this may be because there is at least one further user terminal which requires wireless resource allocation or it may be because a user terminal which has already been the subject of wireless resource allocation requires further wireless resource allocation in order to (attempt to) reach a desired channel quality. When further wireless resource allocation (of either type) is required, the flow returns to step 35. Otherwise the flow completes at step 40.

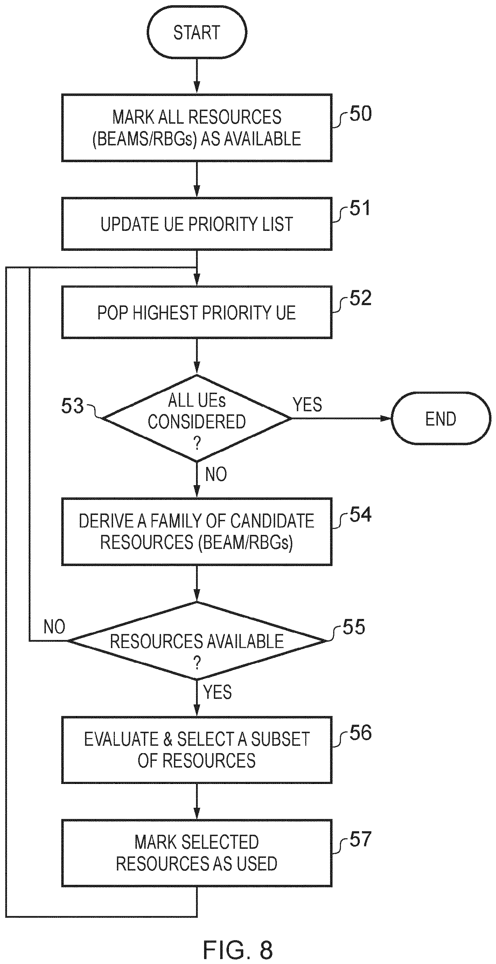

Figure 8 shows a sequence of steps which are taken when carrying out a method of wireless resource allocation in accordance with some examples. The first substantive step of the procedure is shown by step 50, at which in an initialisation step all resources (beams and RBGs) are marked as available for allocation. Then at step 51 a UE priority list is updated, i.e. a ranked list of UEs which will determine the order in which they are considered for resource allocation. A looping, iterative process then begins at step 52, at which the highest priority UE is popped from this priority list. Subsequently at step 53 it is checked if all UEs have now been considered and had wireless resource allocated to them (i.e. in fact that no UE was available to be popped from the list at step 52). When this is the case the method flow ends. Otherwise, when at least one UE remains to have wireless resource allocated, at step 54 a set of available resources (beams and RBGs) is determined, i.e. all of those that have not yet been allocated. In the event that no such resources are available for the current UE under consideration, at step 55 the flow returns to step 52. Otherwise the flow proceeds to step 56 where the available resources are evaluated (in terms of the channel quality they would provide to the current LTE under consideration and the interference that their allocation would cause to previously allocated resources) and a subset is allocated to the current UE. This allocated subset is then marked as used at step 57, and the flow returns to step 52.

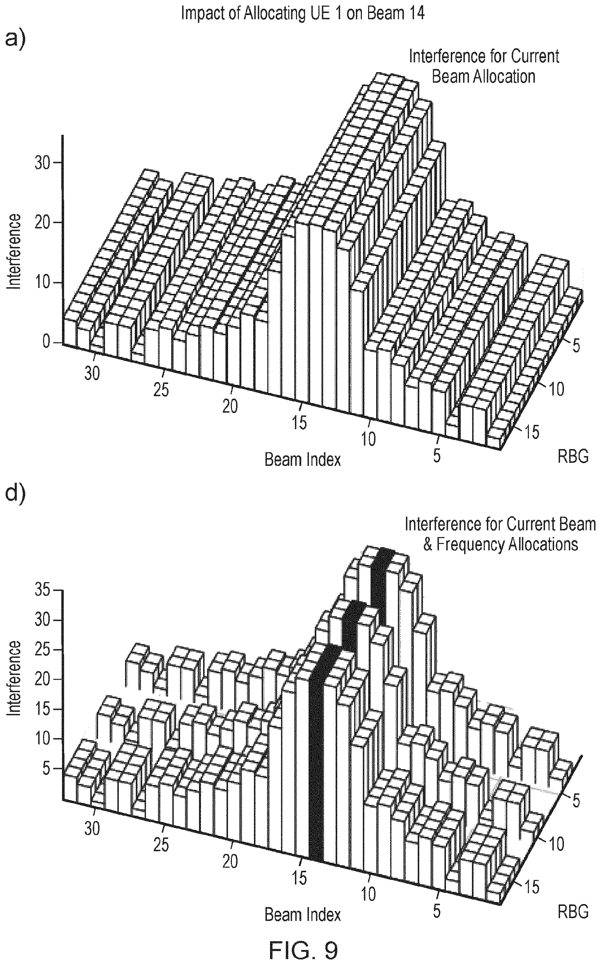

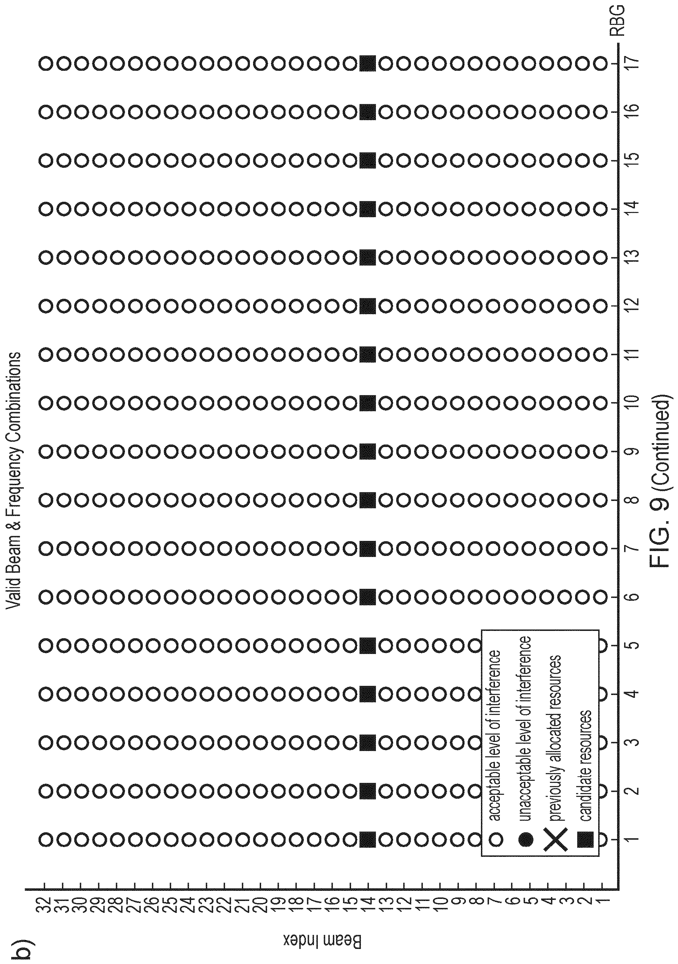

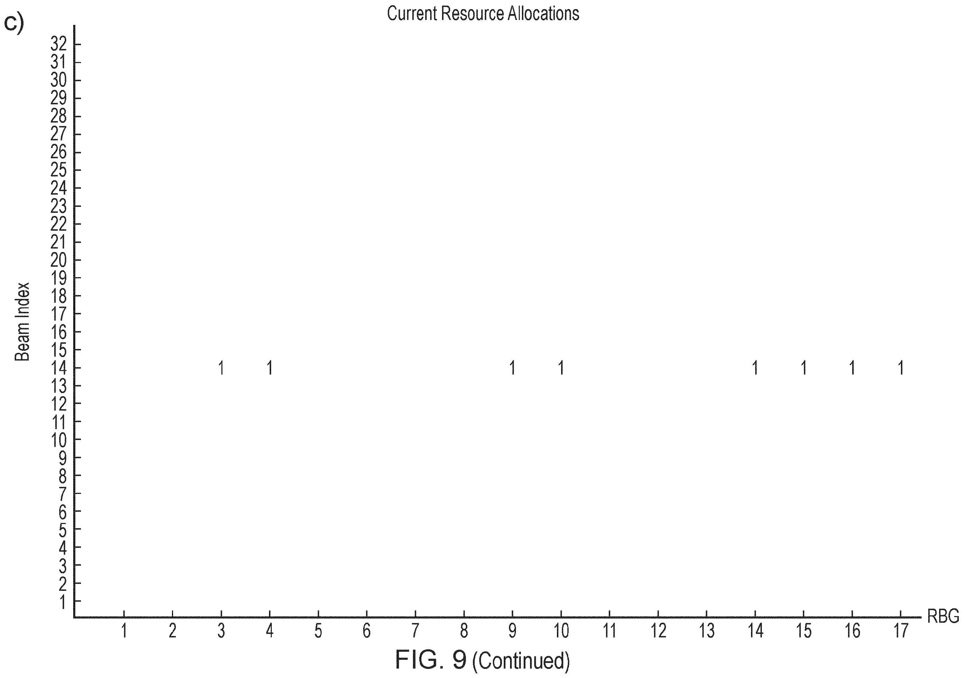

A stage-by-stage example of the iterative procedure for allocating wireless resource is now presented firstly with reference to Figures 9-14. This example is based on the example set of six user terminals and their associated preferred beams shown in Figure 6. In this example a 10dB threshold is set for the maximum interference tolerated. The example is set out in terms of downlink (DL) transmissions, but the methods described here are equally applicable to the uplink (LTL) transmissions. Accordingly, the first UE considered is UE 1, with an indicated preferred beam index 14. With beam 14 allocated to UE 1, Figure 9a shows the power transmitted on beam 14. Figure 9a also shows the power (interference) which this beam introduces (or leaks) in the direction of other beams. Since no other LTEs have been scheduled at this point, it can be seen in Figure 9b that all RBGs for beam index 14 are considered as a valid candidate allocation schedule. Equally all other beam indices show an acceptable level of interference across all RBGs. An RBG schedule is then selected (i.e. a subset of the RBGs available), and this subset of RBGs for beam 14 is illustrated in Figure 9c. The interference of the currently selected beam and frequency allocations is illustrated in Figure 9d.

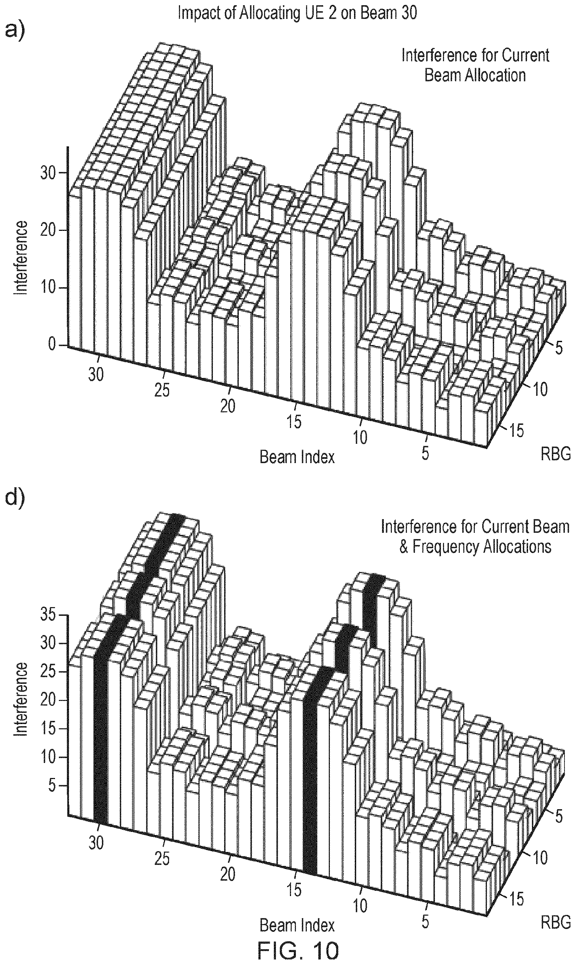

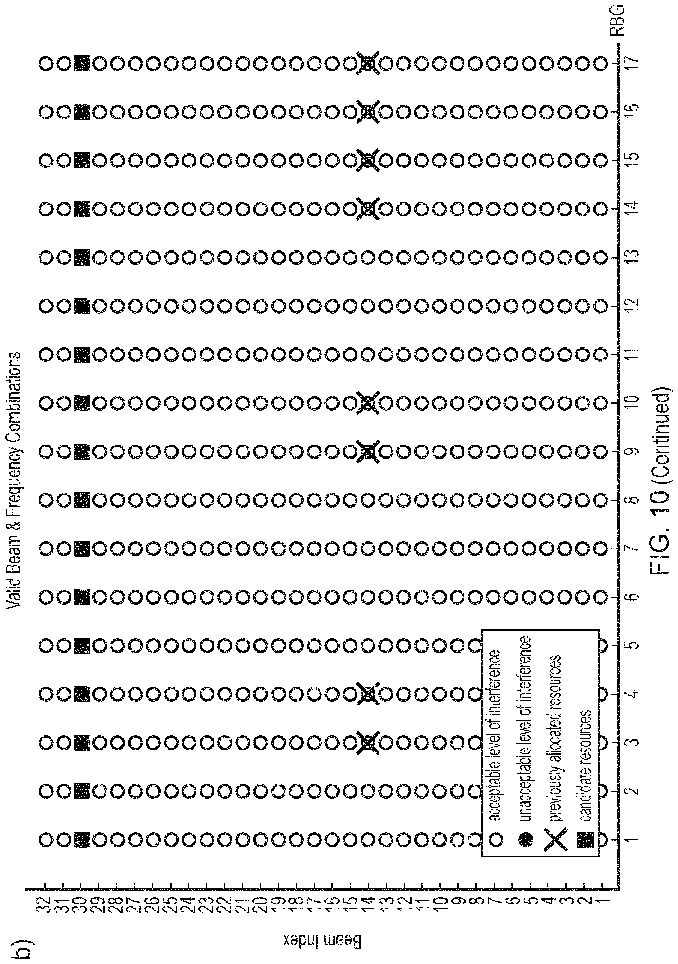

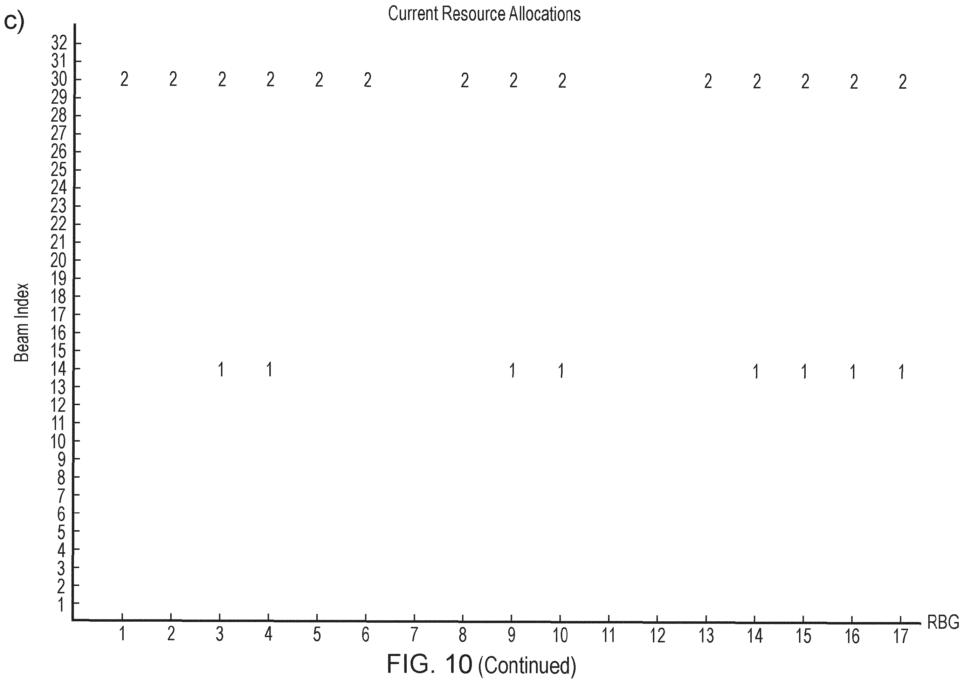

The next stage of the iterative procedure then takes place, whereby the next highest priority user (UE 2) is selected for scheduling. The impact of scheduling UE 2 is shown in Figure 10. Here the ranked list of LTEs gives the preferred beam for UE2 as beam 30. Firstly, with a determination of the effect of power being allocated to all RBGs using beam 30, it is established whether the interference introduced by beam 30 violates the 10dB interference rule on all previously allocated schedules (see Figure 10a). In this case, no violations of this rule are observed and thus all RBGs on beam 30 are considered as a candidate allocation schedule (see Figure 10b). Further analysis of the channel conditions determines that only a portion of the entire set should be utilised in order to achieve the required channel quality, as shown in Figures 10c and 10d.

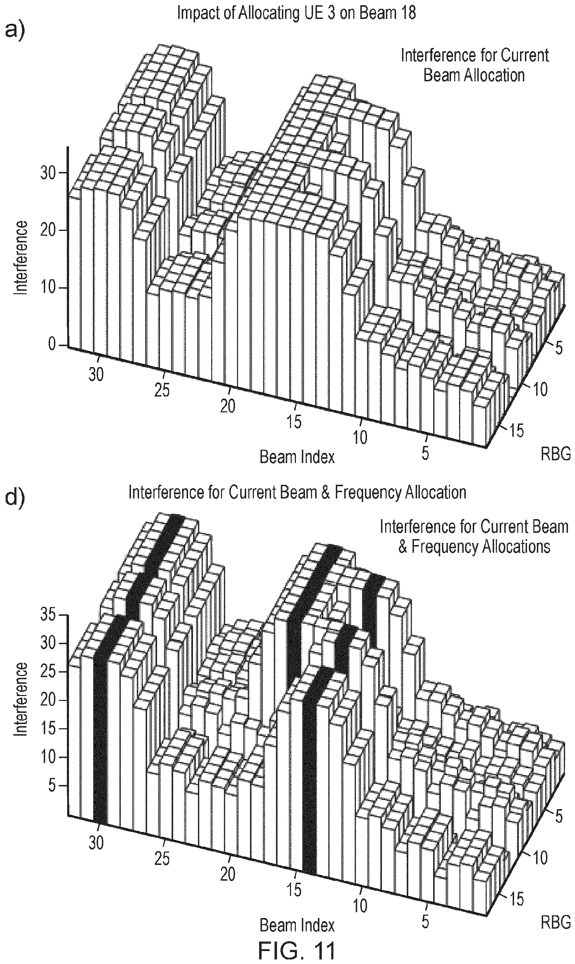

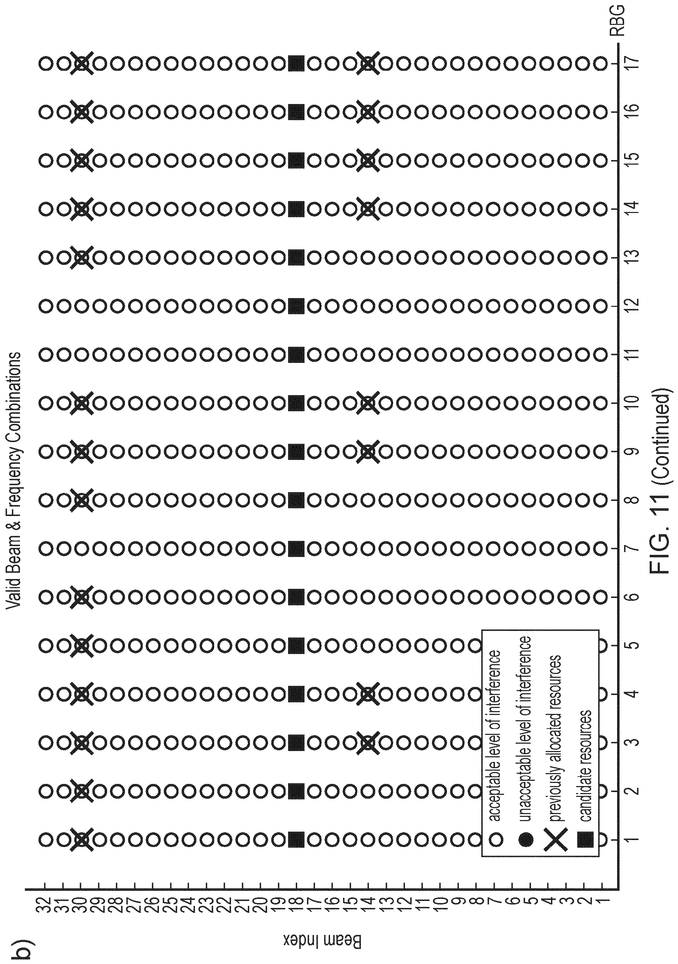

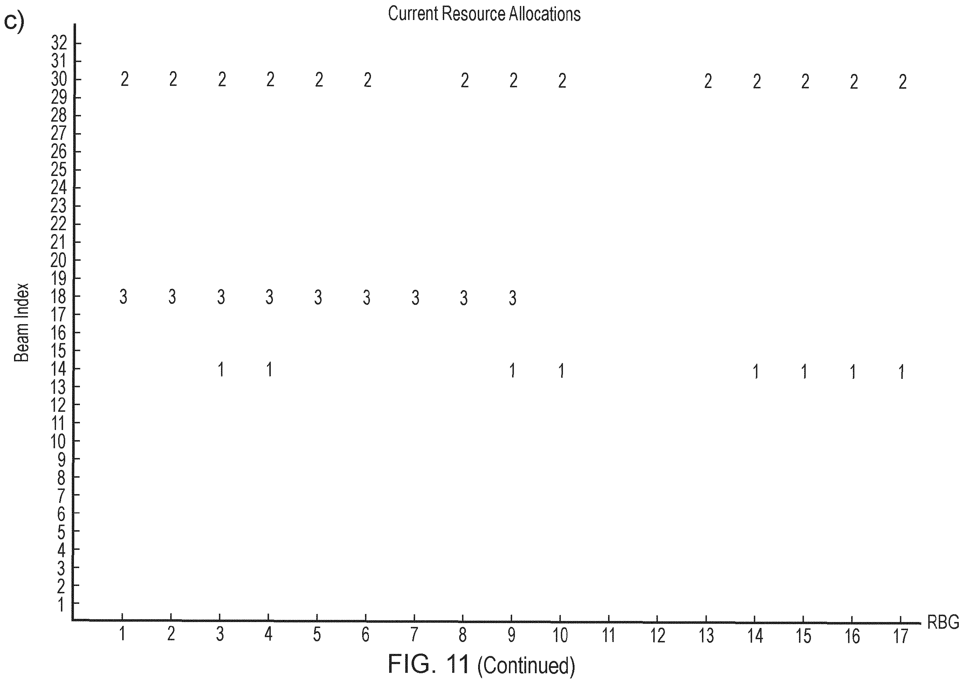

Figures 11a-d then illustrate the interference impact of the next allocation of wireless resource, this relating to the usage of beam 18 to serve LTE 3. As in the case of the allocation of beam 30 for UE 2, this iteration also does not yield any interference violations (i.e. as Figure 11b shows, all RBGs can be considered as a candidate allocation schedule). As it turns out, beam index 18 is sufficiently far away from either of the previously allocated beams 14 beam 30, thus causing little interference. A subset of available RBGs then satisfies the channel quality threshold (see Figure 11c) and the resulting interference mapped across beams and RBGs is shown in Figure 11d.

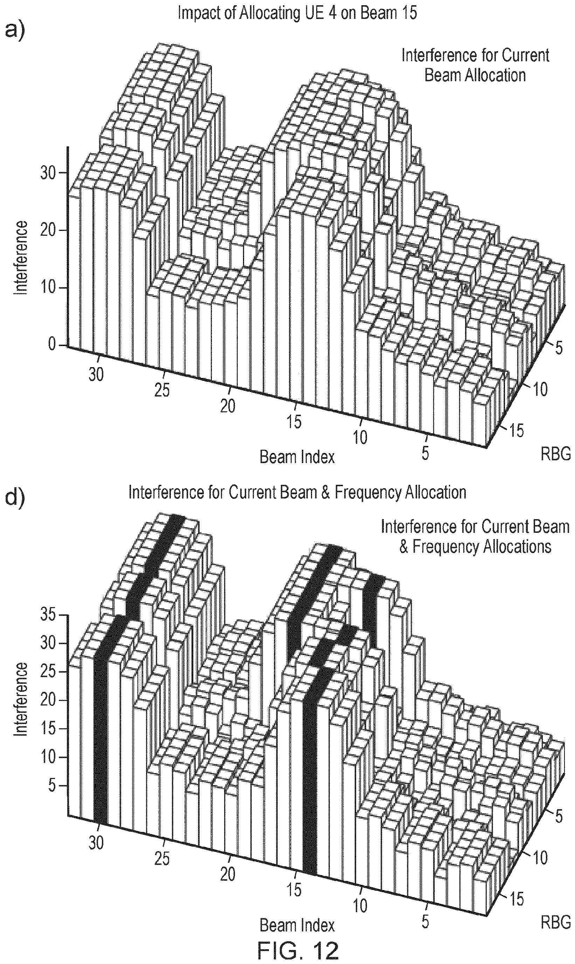

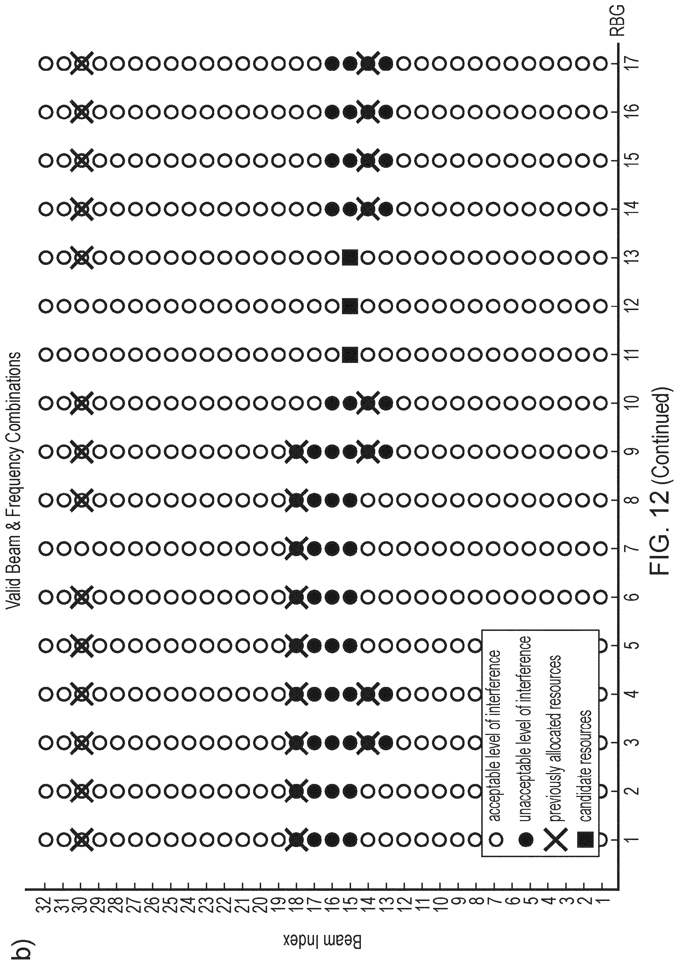

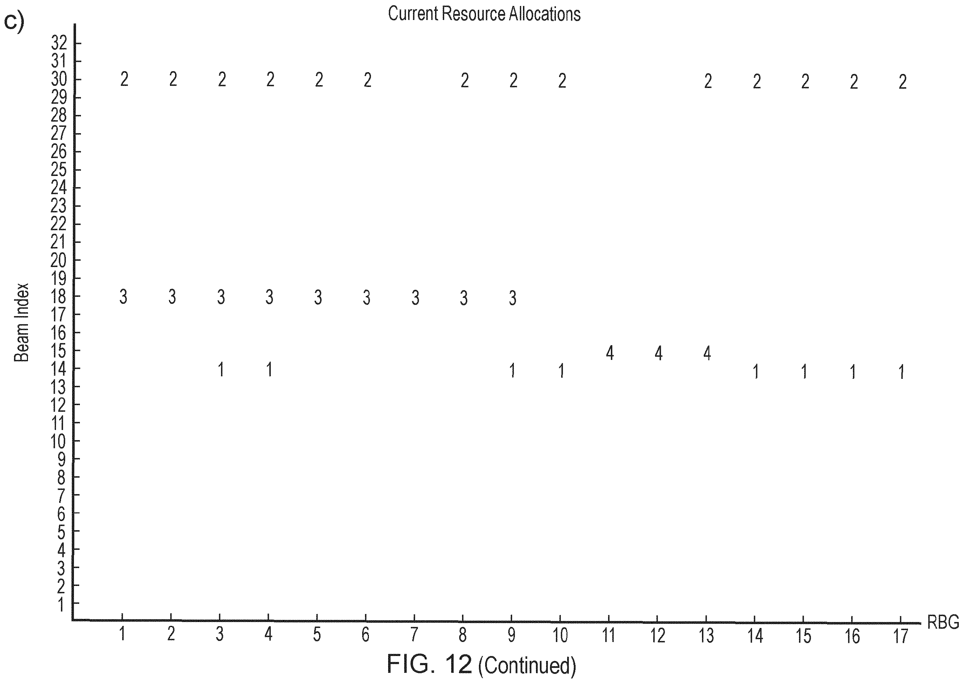

Next, Figures 12a-d illustrate the interference impact of the further allocation of wireless resource comprising a fourth group of RBGs using beam 15 for LTE 4. By this point the resource space is becoming more crowded and the interference introduced by beam 15 (see Figure 12a) results in considerable interference to both (previously allocated) beams 14 and 18 (see Figure 12b). Thus only 3 RBGs are candidates for the scheduler, with the resulting allocations and associated interferences shown in Figures 12c and 12d.

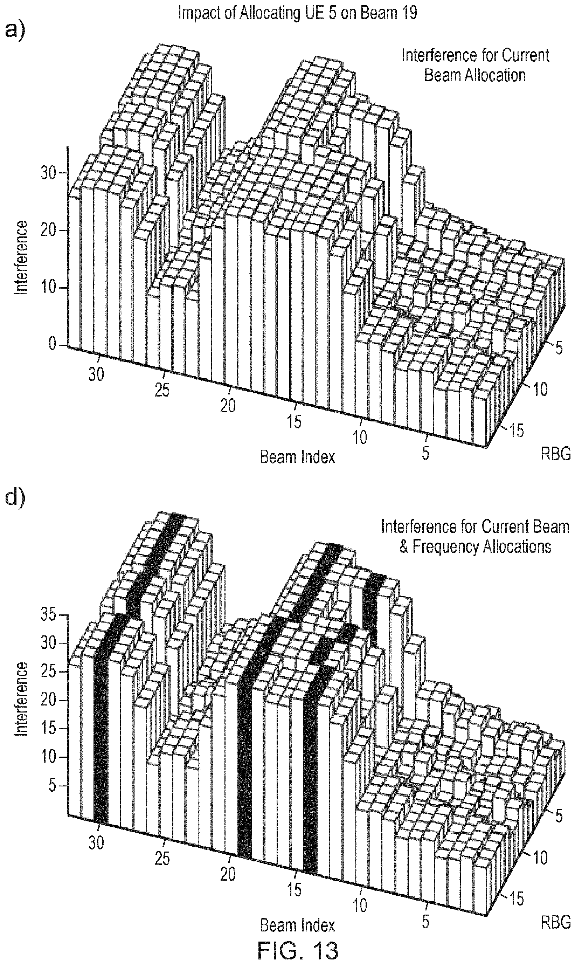

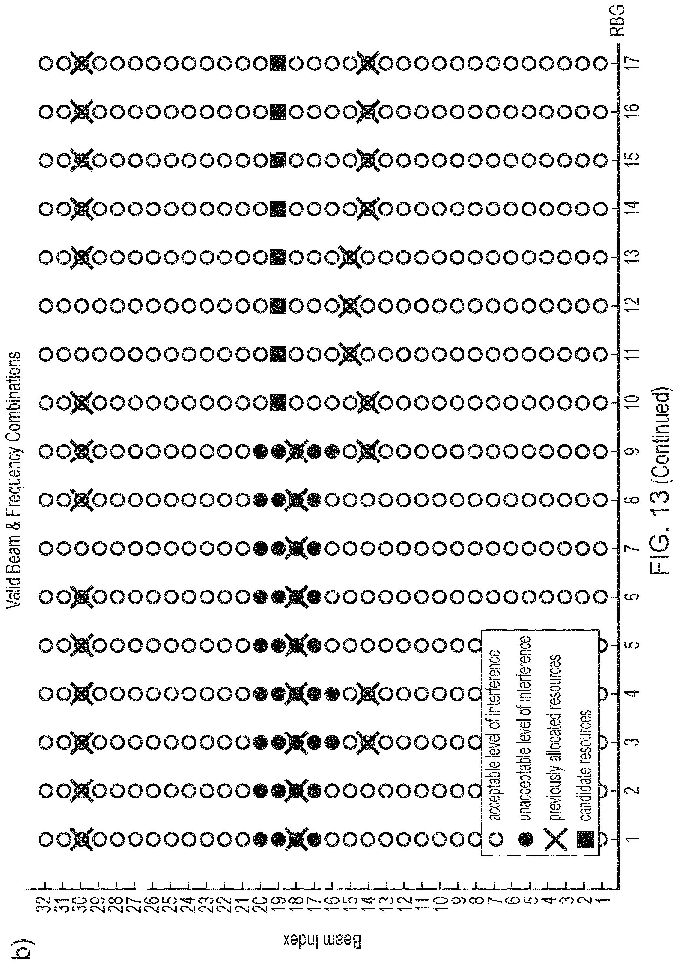

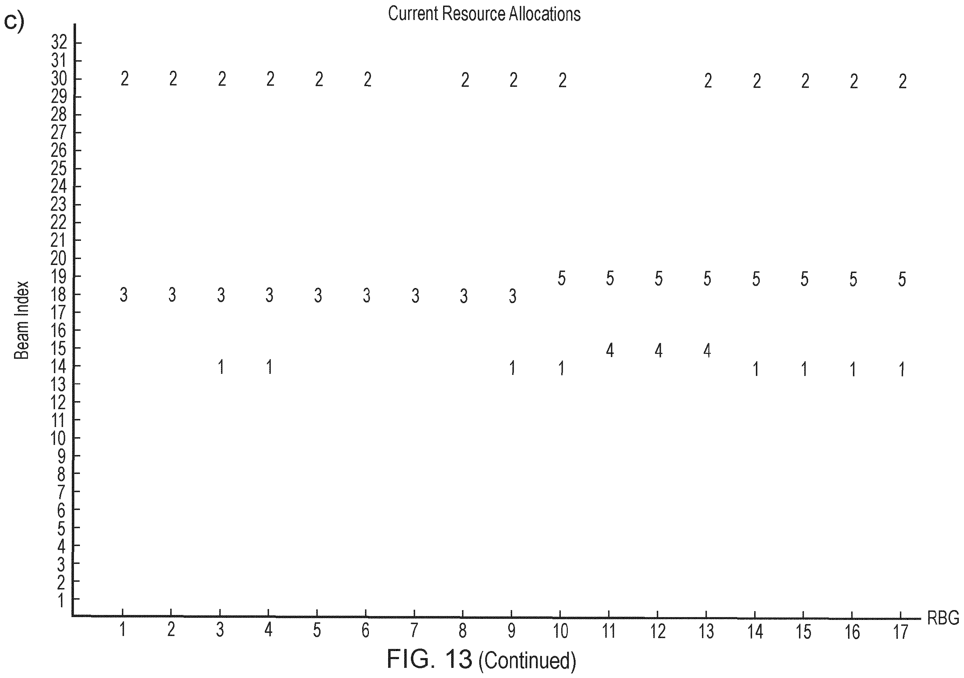

Figures 13a-d illustrate the interference impact of the further allocation of wireless resource comprising a fifth group of RBGs using beam 19 for UE 5. As in the case of beam 15 and UE 4 shown in Figures 12a-b, significant interference is potentially introduced by beam 19 and hence only approximately half of the RBGs are considered as candidates for scheduling (Figure 13b). The resulting allocations and associated interferences shown in Figures 13c and 13d.

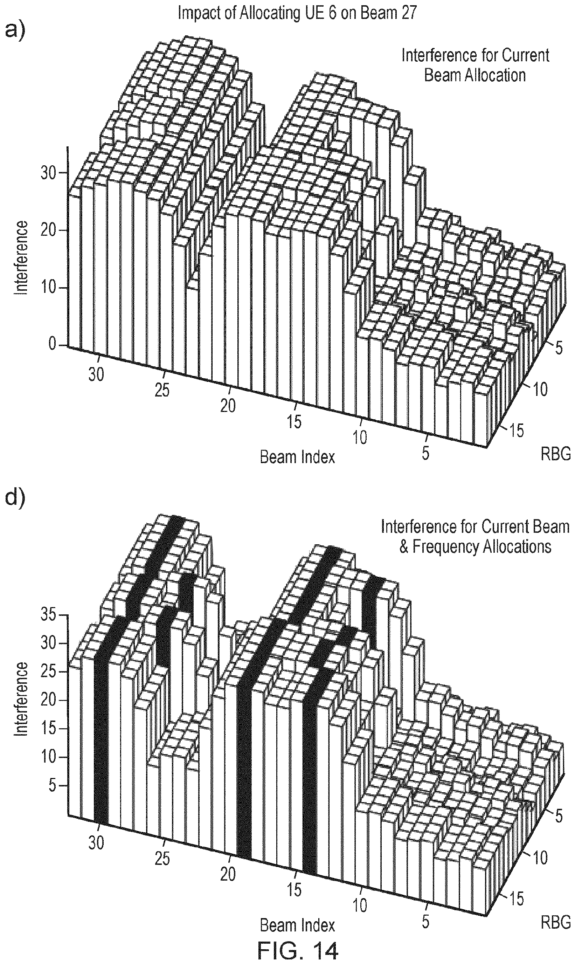

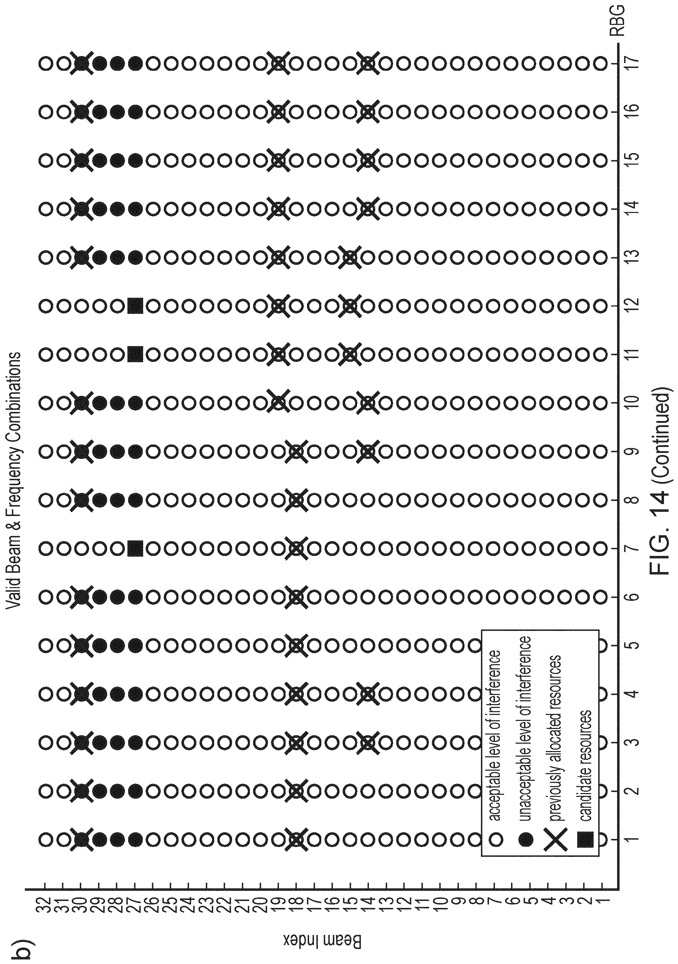

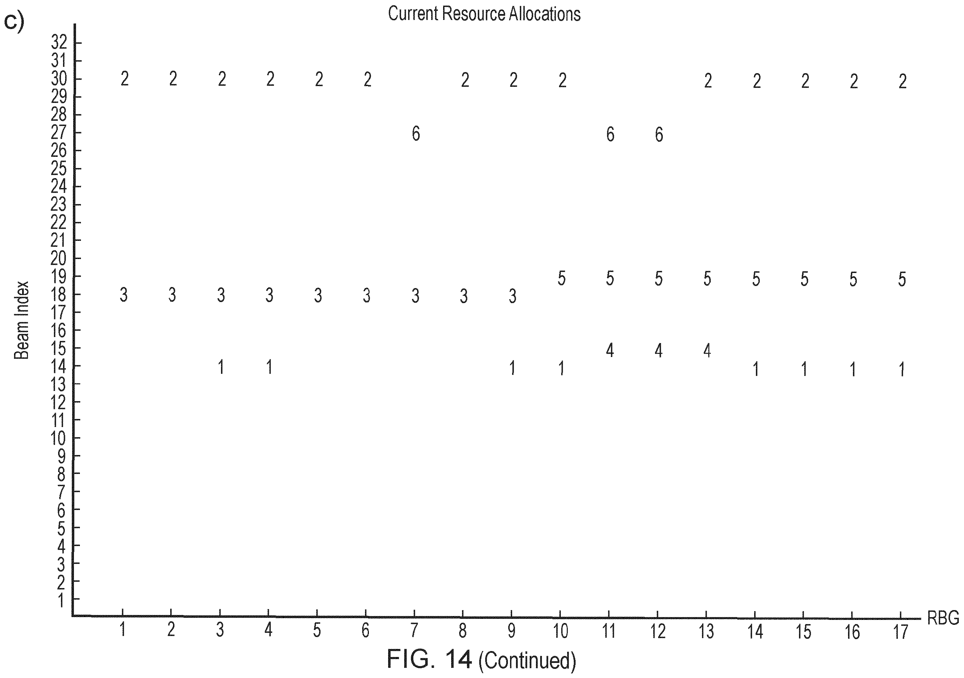

In a final stage of this example iterative process, Figures 14a-d illustrate the interference impact of the further allocation of wireless resource comprising a sixth group of RBGs using beam 27 for UE 6. As in the case of beam 15 / UE 4 (Figures 12a-b) and beam 19 / UE 5 (Figures 13a-b) significant interference is potentially introduced by beam 27 and in this case three of the RBGs are considered as candidates for scheduling (Figure 14b). The resulting allocations and associated interferences shown in Figures 14c and 14d.

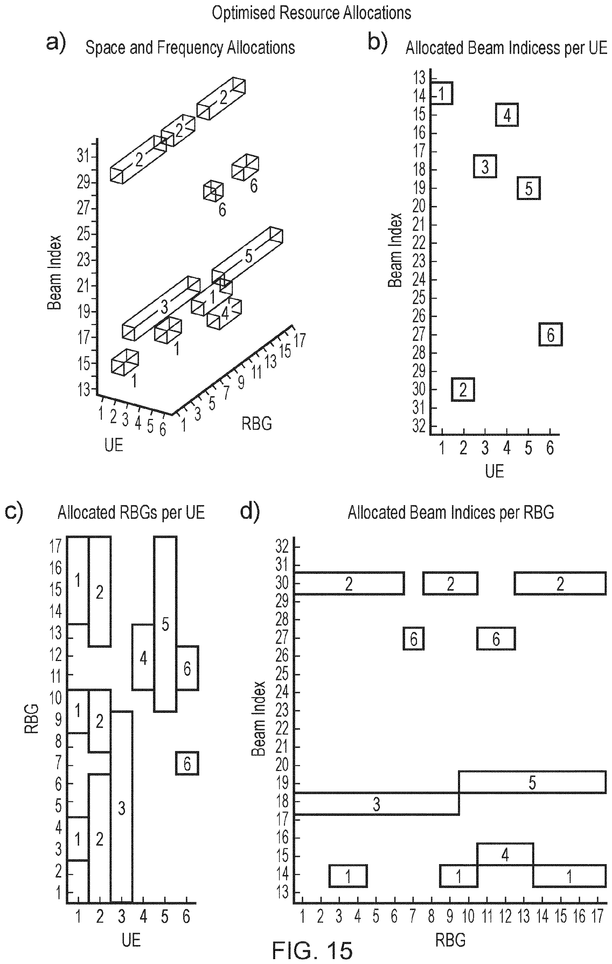

Figures 15a-d illustrate the final wireless resource allocations after the iterative process illustrated by Figures 9 to 14, in terms of a) the space and frequency allocations, b) the allocated beam indices per user terminal, c) the allocated RBGs per user terminal, and d) the allocate beam indices per RBG, when the inter-beam interference does not exceed 10 dB.

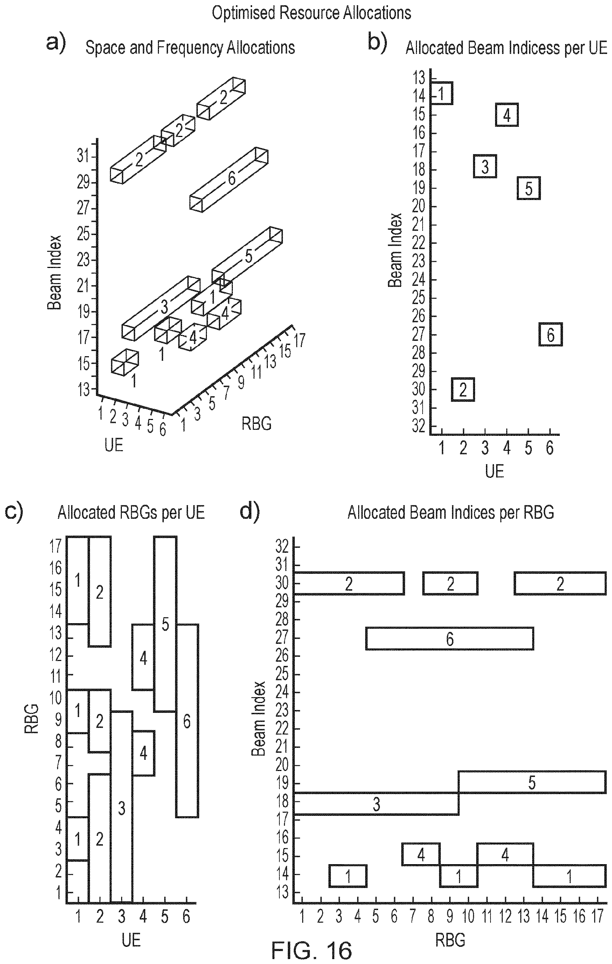

The effect of the level at which the maximum interference threshold is set can be seen by a comparison of the final wireless resource allocations of Figures 15a-d with those shown in Figures 16a-d, which show the outcome of the same iterative wireless resource allocation process of Figures 9 to 14, but where the inter-beam interference threshold has been relaxed to a requirement that it does not exceed 6 dB. The correct level for the interference threshold will depend in particular on the modulation and coding scheme (MCS) selected. Figures 16a-d show that the relaxation of the maximum interference threshold allows more RBGs to be scheduled, as can be seen in particular for LTEs 4 and 6.

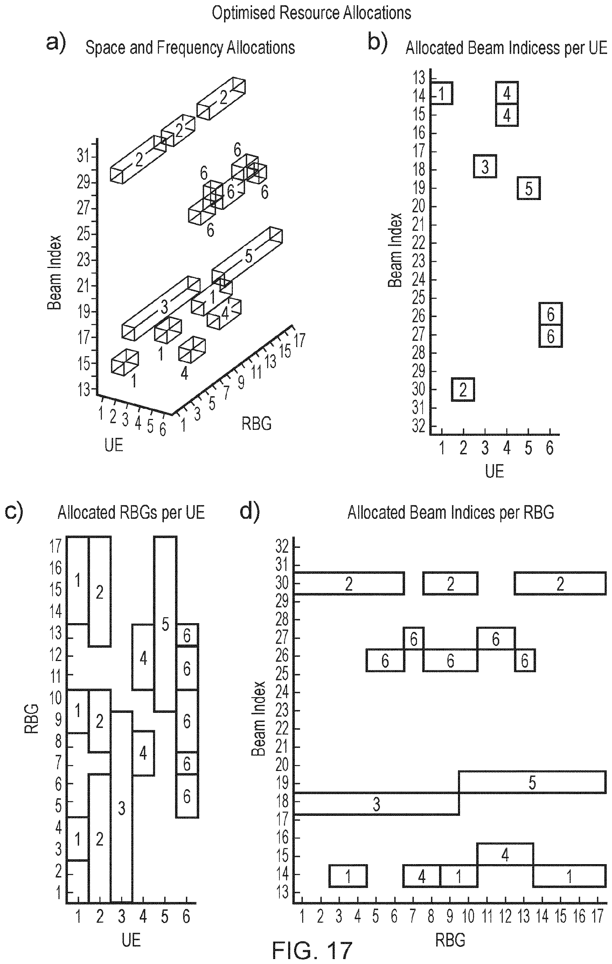

Whilst the above example procedure is presented with a single set of candidate RBGs per UE being considered, instead a family of candidate beams and RBGs may be evaluated. For example, while in the above example UE 4 indicates that beam index 15 is the preferred beam, adjacent beams may also be considered for some RBGs. The result of doing this is illustrated in Figure 17, where the final beam and frequency allocations with adjacent beam consideration is illustrated. The inter-beam interference threshold is again 10 dB, to allow a comparison of the effect of this technique with Figures 15a-d. Hence in this case a beam to the left or to the right of the preferred beam were also evaluated. It should be clear that selecting a beam other than the optimal beam will yield a reduction of SINR, but overall a throughput gain can be expected since more RBGs are used.

For the above examples, constant transmission power per RBG is considered. Instead of this, "power boosting" may also be used, where a range of power distributions across the allocated RBGs also evaluated. This primarily increased the number of permutations of candidate solutions for consideration, but otherwise does not vary the above described techniques.

In brief overall summary, wireless base stations and operating methods therefor are disclosed, where the wireless base station is configured for wireless communication with a plurality of terminals and comprises an antenna array to generate a plural beams. A scheduler allocates wireless resources comprising the plural beams and plural resource block groups. The wireless resource allocation for a given timeslot comprises an initial and an iterative stage, the initial stage comprising: selecting a first beam for allocation to a first terminal and determining a first selected subset of RBGs that satisfy a channel quality threshold. The iterative stage comprises selecting a further beam for allocation to a further terminal and determining a candidate subset of RBGs that each do not have expected interference above an interference tolerance threshold for any already-allocated resource. From this subset an allocation is made to satisfy a channel quality threshold. The iterative stage is repeated as required.

In the present application, the words "configured to..." are used to mean that an element of an apparatus has a configuration able to carry out the defined operation. In this context, a "configuration" means an arrangement or manner of interconnection of hardware or software. For example, the apparatus may have dedicated hardware which provides the defined operation, or a processor or other processing device may be programmed to perform the function. "Configured to" does not imply that the apparatus element needs to be changed in any way in order to provide the defined operation.

Although illustrative embodiments have been described in detail herein with reference to the accompanying drawings, it is to be understood that the invention is not limited to those precise embodiments, and that various changes, additions and modifications can be effected therein by one skilled in the art without departing from the scope of the invention as defined by the appended claims. For example, various combinations of the features of the dependent claims could be made with the features of the independent claims without departing from the scope of the present invention.

## Claims

1. A wireless base station configured for wireless communication with a plurality of terminals and comprising an antenna array configured to generate a plurality of beams, wherein the base station comprises:
a scheduler configured to allocate wireless resources to support the wireless communication, wherein the wireless resources comprise the plurality of beams and a plurality of resource block groups (RBGs), wherein each resource block group is a portion of a frequency range available for the wireless communication in a timeslot, wherein the scheduler is configured to perform wireless resource allocation for the timeslot comprising an initial stage and an iterative stage, wherein the initial stage comprises:
selecting a first selected beam of the plurality of beams for allocation to a first terminal;
determining, for the first selected beam, a first selected subset of RBGs that satisfy a channel quality threshold; and
allocating to the first terminal a first resource allocation comprising the first selected beam and the first selected subset of RBGs,
and wherein the iterative stage comprises:
selecting a further selected beam of the plurality of beams for allocation to a further terminal;
determining, for the further selected beam, a further candidate subset of RBGs that each do not have expected interference above an interference tolerance threshold for any already-allocated resource allocation;
determining, from the further candidate subset of RBGs, a further selected subset of RBGs that each satisfy a channel quality threshold; and
allocating to the further terminal a further resource allocation comprising the further selected beam and the further selected subset of RBGs;
and wherein the wireless resource allocation further comprises iteratively repeating the iterative stage to allocate wireless resource for the plurality of terminals.

2. The wireless base station as claimed in claim 1, wherein iteratively repeating the iterative stage to allocate wireless resource for the plurality of terminals comprises at least one repetition of the iterative stage for at least one further terminal to allocate more than one beam to the at least one further terminal.

3. The wireless base station as claimed in claim 2, wherein iteratively repeating the iterative stage to allocate wireless resource for the plurality of terminals comprises a predetermined maximum number of repetitions of the iterative stage for the at least one further terminal to allocate at most the predetermined maximum number of beams to the at least one further terminal.

4. The wireless base station as claimed in any preceding claim, wherein selection of beams for allocation to terminals is performed in dependence on a set of beam rankings.

5. The wireless base station as claimed in claim 4, wherein the set of beam rankings is dependent on channel quality reports received by the wireless base station from the plurality of terminals.

6. The wireless base station as claimed in claim 4, wherein the set of beam rankings is dependent on channel quality reports determined by the wireless base station.

7. The wireless base station as claimed in any of claims 1-3, wherein at least one iteration of the iterative stage comprises selecting the further selected beam of the plurality of beams for allocation to the further terminal on a basis that the further selected beam is adjacent to an already-allocated beam for the further terminal.

8. The wireless base station as claimed in claim 7, wherein the wireless base station is configured to respond to a channel quality report from the further terminal indicating a preferred beam to select an adjacent beam to the preferred beam in a subsequent iteration stage.

9. The wireless base station as claimed in any preceding claim, wherein the scheduler is configured to perform the wireless resource allocation for the timeslot following a ranked order of terminals.

10. The wireless base station as claimed in any preceding claim, wherein at least one of:
determining the first selected subset of RBGs;
determining the further candidate subset of RBGs; and
determining the further selected subset of RBGs,
is performed as a nested iterative process, in which a power distribution across the relevant RBGs is varied at each iteration of the nested iterative process in order to determine at least one of the first selected subset of RBGs, the further candidate subset of RBGs, and the further selected subset of RBGs in a manner which improves channel quality and/or to reduce interference.

11. The wireless base station as claimed in any preceding claim, wherein the wireless resource allocation for the timeslot is for one of:
downlink communication from the wireless base station to the plurality of terminals; and
uplink communication to the wireless base station from the plurality of terminals.

12. The wireless base station as claimed in any preceding claim, wherein amongst the first selected beam of the initial stage and all further selected beams of the iterative stage, at least one beam is re-used.

13. The wireless base station as claimed in any preceding claim, wherein the interference tolerance threshold is dependent on the further selected beam.

14. The wireless base station as claimed in any preceding claim, wherein the wireless resource allocation for the timeslot further comprises a modulation and coding scheme selection for the first resource allocation and for the further resource allocation.

15. A method of operating a wireless base station configured for wireless communication with a plurality of terminals and comprising an antenna array configured to generate a plurality of beams, wherein the method comprises:
allocating wireless resources to support the wireless communication, wherein the wireless resources comprise the plurality of beams and a plurality of resource block groups (RBGs), wherein each resource block group is a portion of a frequency range available for the wireless communication in a timeslot, wherein the allocating for the timeslot is performed in an initial stage and an iterative stage, wherein the initial stage comprises:
selecting a first selected beam of the plurality of beams for allocation to a first terminal;
determining, for the first selected beam, a first selected subset of RBGs that satisfy a channel quality threshold; and
allocating to the first terminal a first resource allocation comprising the first selected beam and the first selected subset of RBGs,
and wherein the iterative stage comprises:
selecting a further selected beam of the plurality of beams for allocation to a further terminal;
determining, for the further selected beam, a further candidate subset of RBGs that each do not have expected interference above an interference tolerance threshold for any already-allocated resource allocation;
determining, from the further candidate subset of RBGs, a further selected subset of RBGs that each satisfy a channel quality threshold; and
allocating to the further terminal a further resource allocation comprising the further selected beam and the further selected subset of RBGs;
and wherein the wireless resource allocation further comprises iteratively repeating the iterative stage to allocate wireless resource for the plurality of terminals.
